# EUROPÄISCHE PATENTSCHRIFT

(11) **EP 1 660 769 B1**
(45) Veröffentlichungstag und Bekanntmachung des Hinweises auf die Patenterteilung: **22.04.2009**
(21) Anmeldenummer: 04762692.4
(22) Anmeldetag: 19.08.2004
(51) Int. Cl.: F02F 3/00, F16J 1/00

(54) **MEHRTEILIGER KOLBEN F R EINEN VERBRENNUNGSMOTOR**
SPLIT PISTON FOR AN INTERNAL COMBUSTION ENGINE
PISTON EN PLUSIEURS PARTIES DESTINE A UN MOTEUR A COMBUSTION INTERNE

(30) Priorität: 19.08.2003 DE 10337961
(43) Veröffentlichungstag der Anmeldung: 31.05.2006
(73) Patentinhaber: MAHLE GMBH, D-70376 Stuttgart (DE)
(72) Erfinder: ULLRICH, Michael, 71696 Möglingen (DE)
(74) Vertreter: Pohle, Reinhard
(86) Internationale Anmeldenummer: PCT/DE2004/001852
(87) Internationale Veröffentlichungsnummer: WO 2005/019631

(56) Entgegenhaltungen:
- EP-A- 0 469 666
- DD-A- 106 677
- DE-A- 2 212 922
- DE-A- 3 719 469
- NL-C- 60 092
- US-A1- 2003 167 918
- US-B1- 6 729 291

## Beschreibung

Die Erfindung betrifft einen mehrteiligen Kolben für einen Verbrennungsmotor nach dem Oberbegriff des Anspruches 1.

Aus der Deutschen Patentschrift 969 838 ist ein mehrteiliger Kolben für einen Verbrennungsmotor bekannt, der aus einem Kolbenhauptkörper und aus einem mittels Dehnschrauben damit verbundenen Bodenteil besteht. Um hierbei auch bei schnelleren Hin- und Herbewegungen des Kolbens eine sichere Schraubverbindung zu gewährleisten, sind zur Montage des Bodenteiles an den Kolbenhauptkörper eine größere Anzahl von Dehnschrauben erforderlich. Dies hat die Nachteile, dass die Montage des bekannten Kolbens sehr zeit- und arbeitsaufwendig ist.

Aus der Patentschrift DD 106 677 ist ein aus einem Oberteil und einem Unterteil bestehender Kolben bekannt, bei dem das Oberteil mit dem Unterteil über einen Gewindering verschraubt ist. Hierbei weisen sowohl die gesamte radiale Innenfläche als auch die gesamte radial Außenfläche des Gewinderinges je ein Gewinde auf, über das der Gewindering teils mit dem Oberteil und teils mit dem Unterteil des Kolbens verschraubt ist. Beim Verschrauben des Kolbens ergibt sich zwar eine Torsion des Gewinderinges, die zu einer Stauchung des Gewinderinges in axialer Richtung und damit zu Spannungen im Gewindering und zu einer auf die Schraubverbindung wirkende Vorspannung führt. Aber weil hierbei die gesamte radiale Außenfläche und die gesamte radiale Innenfläche des Gewinderinges je ein Gewinde aufweisen und mit dem Oberteil und dem Unterteil des Kolbens verschraubt sind, wird dadurch eine für eine Festigung der Schraubverbindung ausreichende Formveränderung des Gewinderinges mit einer ausreichenden auf die Schraubverbindung wirkenden Vorspannung behindert, sodass ein großer Arbeitsaufwand erforderlich ist, eine für eine sichere Schraubverbindung ausreichende Formveränderung des Gewinderinges zu bewirken.

In der Europäischen Patentanmeldung EP 0 469 666 A1 ist ein zweiteiliges Kolbenoberteil beschrieben, bei dem ein Bodenteil mit einem Schaftteil über einen am Bodenteil angeformten Gewindebolzen und eine hierfür in den Schaftteil eingebrachte Gewindebohrung verschraubt ist. Hierbei ist das Schaftteil nahe der Gewindebohrung durch radial angeordnete Rippen verstärkt, sodass ein großer Arbeitaufwand erforderlich ist, beim Verschrauben des Bodenteils mit dem Schaftteil eine Verformung des Bereiches nahe der Gewindebohrung zu bewirken, um über eine dadurch erreichte Vorspannung auf die Schraubverbindung die Festigkeit der Schraubverbindung zu verbessern.

Diese Nachteile des Standes der Technik zu vermeiden, ist Aufgabe der Erfindung. Gelöst wird die Aufgabe mit den im Kennzeichen des Hauptanspruches stehenden Merkmalen. Zweckmäßige Ausgestaltungen der Erfindung sind Gegenstand der Unteransprüche.

Die Vorteile der schnellen, einfachen und sicheren Montage des erfindungsgemäßen Kolbens werden dadurch erreicht, dass hierbei zunächst eine Zwischenhülse in eine Ringrippe des Unterteiles des Kolbens eingeschraubt wird, wonach das gesamte Oberteil des Kolbens in die Zwischenhülse geschraubt wird. Die Zwischenhülse wirkt hierbei als Stauchkörper, der eine der Fixierung der Schraubverbindung dienende mechanische Spannung erzeugt.

### Die Erfindung wird im Folgenden anhand der Zeichnungen beschrieben. Es zeigen

- Fig. 1: ein Schnittbild eines zweiteiligen Kolbens, dessen Oberteil mit dessem Unterteil über eine Zwischenhülse verschraubt ist, und
- Fig. 2: ein ausschnittsweises, vergrößertes Schnittbild des Kolbens mit der erfindungsgemäßen Zwischenhülse.

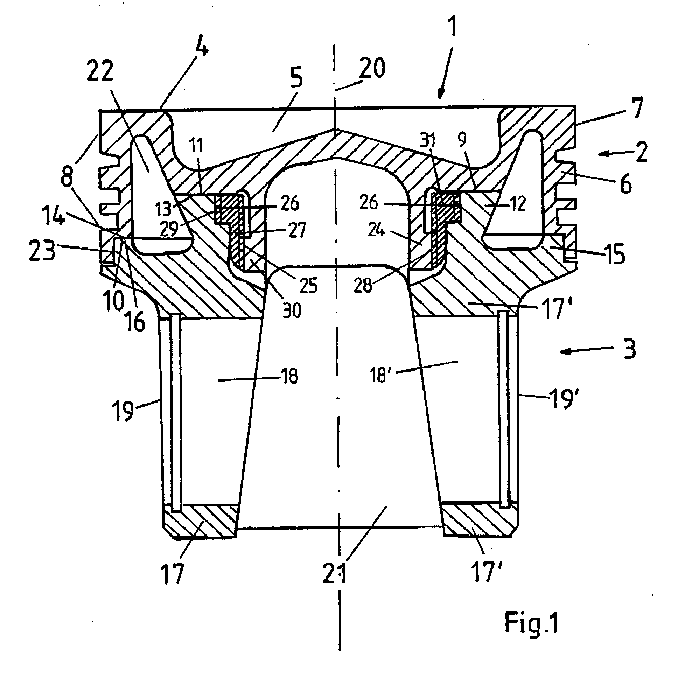

In Fig. 1 ist ein mehrteiliger gekühlter Kolben 1 dargestellt, der aus einem Oberteil 2 und einem Unterteil 3 besteht. Das Oberteil 2 und das Unterteil 3 sind aus Stahl gefertigt. Vom Oberteil 2 wird der Kolbenboden 4 gebildet, dessen innerer Bereich eine Verbrennungsmulde 5 aufweist. An den Außenrand des Kolbenbodens 4 ist eine Ringwand 6 angeformt, deren Außenfläche kolbenbodenseitig den Feuersteg 7 bildet, woran sich die Ringpartie 8 mit Ringnuten zur Aufnahme von in der Figur nicht dargestellten Kolbenringen anschließt.

An der dem Kolbenboden 4 abgewandten Seite des Unterteils 3 sind zwei Bolzennaben 17, 17' mit je einer Bolzenbohrung 18, 18' angeordnet, deren Stirnseiten 19, 19' gegenüber der Ringwand 6 in Richtung Kolbenlängsachse 20 zurückgesetzt angeordnet sind. Mit den Bolzennaben 17, 17' und dem Unterteil 3 des Kolbens 1 sind Kolbenschaftelemente 21 verbunden.

Miteinander verbunden sind das Oberteil 2 und das Unterteil 3 des Kolbens 1 zum einen über eine innere Auflage 9 und zum anderen über eine konzentrisch dazu angeordnete, äußere Auflage 10. Die innere Auflage 9 wird von einer auf der der Verbrennungsmulde 5 abgewandten Seite des Oberteils 2 angeordneten Auflagefläche 11 und von einer kolbenbodenseitig auf einer ringförmigen Tragrippe 12 des Unterteils 3 angeordneten Auflagefläche 13 gebildet. Die äußere Auflage 10 wird von einer die Unterseite der Ringwand 6 begrenzenden Auflagefläche 14 und von einer kolbenbodenseitig auf einem ringförmigen Tragsteg 15 des Unterteils 3 angeordneten Auflagefläche 16 gebildet.

Vom Oberteil 2 und vom Unterteil 3 des Kolbens 1 wird ein im Randbereich des Kolbenbodens 4 angeordneter Kühlkanal 22 gebildet, dessen radial äußere Begrenzung von der Ringwand 6, dessen radial innere Begrenzung teils von der Tragrippe 12 und teils vom die Verbrennungsmulde 5 begrenzenden Kolbenboden 4, und dessen axial untere Begrenzung vom Unterteil 3 des Kolbens 1 gebildet werden. Über in der Figur nicht dargestellte Ein- und Auslassöffnungen wird Kühlöl in den Kühlkanal 22 eingeleitet und aus dem Kühlkanal 22 abgeleitet.

Beim Zusammenbau von Oberteil 2 und Unterteil 3 wird die koaxiale Ausrichtung dieser beiden Teile dadurch erreicht, dass der Tragsteg 15 im Schnitt stufenförmig ausgebildet ist und die untere Stirnseite der Ringwand 6 auf der Innenseite eine zylinderförmige Ausnehmung 23 aufweist, deren Innenform der Außenform des Tragsteges 15 entspricht, sodass bei der Montage von Ober- und Unterteil 2, 3 des Kolbens 1 der Tragsteg 15 in die Ausnehmung 23 einführbar und damit Ober- und Unterteil 2, 3 koaxial ausrichtbar sind.

Auf der der Verbrennungsmulde 5 abgewandten Seite weist der Kolbenboden 4 einen zur Kolbenlängsachse 20 koaxial angeordneten, rohrförmigen Verbindungsansatz 24 auf, dessen Länge den Abstand vom Kolbenboden 4 bis zu den Bolzennaben 17, 17' nicht übersteigt. Die Außenseite des dem Kolbenboden 4 abgewandten Endes des Verbindungsansatzes 24 ist mit einem Außengewinde 25 versehen. Zudem weist die Innenseite der Tragrippe 12 nahe dem Kolbenboden 4 ein Innengewinde 26 auf. Hierbei sind die Radii der Tragrippe 12 und des Verbindungsansatzes 24 so gewählt, dass der radiale Durchmesser des Innengewindes 26 der Tragrippe 12 größer ist als der radiale Durchmesser des Außengewindes 25 des Verbindungsansatzes 24. Zudem ist der axiale Abstand zwischen dem Außengewinde 25 und den Bolzennaben 17, 17' geringer als der axiale Abstand zwischen dem Innengewinde 26 und den Bolzennaben 17, 17'.

Um das Oberteil 2 und das Unterteil 3 über die beiden Gewinde 25 und 26 miteinander zu verschrauben, ist somit eine rohrförmige Zwischenhülse 27 erforderlich, deren Länge der Differenz der Abstände des Außengewindes 25 und des Innengewindes 26 von den Bolzennaben 17, 17' entspricht, und die zumindest an ihren Enden ein innen 28 und ein außen liegendes Gewinde 29 aufweist, wobei das innen liegende Gewinde 28 auf das Außengewinde 25 des Verbindungsansatzes 24 und das außen liegende Gewinde 29 auf das Innengewinde 26 der Tragrippe 12 passen. Dadurch, dass die Zwischenhülse 27 nur im Bereich der Gewindeverbindungen 25, 26, 28, 29 in Kontakt mit dem Verbindungsansatz 24 und der Tragrippe 12 kommt, ist gewährleistet, dass bei der Montage von Ober- und Unterteil 2, 3 des Kolbens 1 der Verbindungsansatz 24 eine Dehnung und die Zwischenhülse 27 eine Stauchung erfahren, durch welche Verformungen auf die Gewindeverbindungen zwischen Ober- und Unterteil 2, 3 des Kolbens 1 eine der Fixierung dieser Verbindungen dienende mechanische Spannung ausgeübt wird. Damit die der Fixierung der Gewindeverbindungen dienenden Verformungen des Verbindungsansatzes 24 und der Zwischenhülse 27 ausreichend groß sind, sind deren Wandstärken demgemäß zu dimensionieren.

Im Ausführungsbeispiel gemäß der Figur weist der Verbindungsansatz 24 an seinem den Bolzennaben 17, 17' zugewandten Ende einen Schraubflansch 30 mit dem Außengewinde 25 auf, ist das innen liegende Gewinde 28 auf der gesamten Innenseite der Zwischenhülse 27 angeordnet, und weist das dem Kolbenboden 4 zugewandte Ende der Zwischenhülse 27 ebenfalls einen Schraubflansch 31 mit dem außen liegenden Gewinde 29 auf. Hierdurch sind die oben beschriebenden und für die Verformung der Zwischenhülse 27 und des Verbindungsansatzes 24 erforderlichen Bedingungen erfüllt.

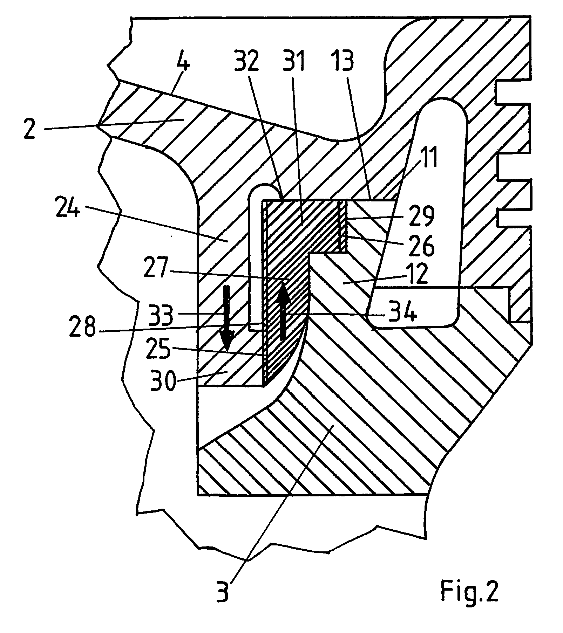

Fig. 2 zeigt in vergrößerter Darstellung die über die Zwischenhülse 27 erfolgende Schraubverbindung zwischen dem Oberteil 2 und dem Unterteil 3 des Kolbens 1. Hierzu weist der Verbindungsansatz 24 an seinem dem Kolbenboden 4 abgewandten Ende den Schraubflansch 30 auf, der auf seiner radial außen liegenden Umfangsfläche das Außengewinde 25 trägt. Die Zwischenhülse 27 weist auf ihrer gesamten, radial innen liegenden Fläche das Gewinde 28 auf, auf das das Außengewinde 25 des Schraubflansches 30 passt. Auf ihrem dem Kolbenboden 4 zugewandten Ende weist die Zwischenhülse 27 ebenfalls einen Schraubflansch 31 auf, der auf seiner radial außen liegenden Umfangsfläche das Gewinde 29 trägt, das auf das Innengewinde 26 passt, welches auf einer radial innen liegenden und an das Oberteil 2 grenzenden Fläche der Tragrippe 12 angeordnet ist. Hierbei bildet die kolbenbodenseitige Stirnfläche 32 der Zwischenhülse 27 mit der auf der Tragrippe 12 angeordneten Auflagefläche 13 eine gemeinsame, ebene Auflagefläche für das Oberteil 2 des Kolbens 1.

Die Montage des Kolbens 1 erfolgt auf einfache Weise dadurch, dass zunächst die Zwischenhülse 27 in die Ringrippe 12 des Unterteils 3 und anschließend das Oberteil 2 des Kolbens 1 über das Außengewinde 25 des Verbindungsstückes 24 in das innen liegende Gewinde 28 der Zwischenhülse 27 eingeschraubt werden. Beim Zusammenschrauben des Oberteiles 2 und des Unterteiles 3 kommt zunächst die untere Auflagefläche 11 des Oberteiles 2 in Kontakt mit der von der Tragrippe 12 und der Zwischenhülse 27 gebildeten Auflagefläche 13, 32, wonach ein weiteres Festdrehen des Oberteiles 2 auf dem Unterteil 3 bewirkt, dass der Verbindungsansatz 24 eine Dehnung in Richtung des Pfeiles 33 und die Zwischenhülse 27 eine Stauchung in Richtung des Pfeiles 34 erfahren. Durch diese Verformungen wird insb. auf die Gewindeverbindung 25, 28 zwischen dem Verbindungsansatzes 24 und der Zwischenhülse 27 eine mechanische Spannung ausgeübt, die erheblich zur Fixierung dieser Gewindeverbindung 25, 28 beiträgt.

### Bezugszeichenliste

- 1: Kolben
- 2: Oberteil des Kolbens 1
- 3: Unterteil des Kolbens 1
- 4: Kolbenboden
- 5: Verbrennungsmulde
- 6: Ringwand
- 7: Feuersteg
- 8: Ringpartie
- 9: innere Auflage
- 10: äußere Auflage
- 11: Auflagefläche
- 12: Tragrippe
- 13, 14: Auflagefläche
- 15: Tragsteg
- 16: Auflagefläche
- 17, 17': Bolzennabe
- 18, 18': Bolzenbohrung
- 19, 19': Stirnseiten der Bolzenbohrungen 18, 18'
- 20: Kolbenlängsachse
- 21: Kolbenschaftelement
- 22: Kühlkanal
- 23: Ausnehmung
- 24: Verbindungsansatz
- 25: Außengewinde
- 26: Innengewinde
- 27: Zwischenhülse
- 28, 29: Gewinde der Zwischenhülse 27
- 30,31: Schraubflansch
- 32: Stirnfläche der Zwischenhülse 27
- 33,34: Pfeil

## Patentansprüche

1. Mehrteiliger Kolben (1) für einen Verbrennungsmotor
- mit einem einen Kolbenboden (4) aufweisenden Oberteil (2), an dem eine Ringwand (6) mit einer Ringpartie (8) angeformt ist, und
- mit einem Unterteil (3), das über eine Schraubverbindung (12, 24-31) mit dem Oberteil (2) verbunden ist und auf seiner dem Oberteil (2) abgewandten Unterseite Bolzennaben (17, 17') mit Bolzenbohrungen (18, 18') und mit den Bolzennaben (17, 17') verbundene Kolbenschaftelemente (21) aufweist,
**dadurch gekennzeichnet,**
**dass** die Schraubverbindung aus folgenden Elementen besteht:
aus einem auf der Unterseite des Kolbenbodens (4) angebrachten, im Wesentlichen rohrförmigen Verbindungsansatz (24), der koaxial zur Kolbenlängsachse (20) angeordnet ist und an seinem in axialer Richtung vom Kolbenboden (4) wegweisenden Ende ein Außengewinde (25) aufweist, das auf einer radial außen liegenden Umfangsseite des Verbindungsansatzes (24) angeordnet ist,
aus einer kolbenbodenseitig am Unterteil (3) angeformten Tragrippe (12), die in axialer Richtung betrachtet an ihrem kolbenbodenseitigen Ende ein Innengewinde (26) aufweist, das auf einer radial innen liegenden Fläche angeordnet ist, und
aus einer im Wesentlichen rohrförmigen Zwischenhülse (27) mit einem innen liegenden Gewinde (28), das auf das Außengewinde (25) des Verbindungsansatzes (24) passt, und einem außen liegenden (29) Gewinde, das in das Innengewinde (26) der Tragrippe (12) passt, wobei mittels der Zwischenhülse (27) das Oberteil (2) mit dem Unterteils (3) über den Verbindungsansatz (24) und über die Tragrippe (12) verschraubbar ist,
**dass** der axiale Abstand zwischen dem Innengewinde (26) der Tragrippe (12) und dem Kolbenboden (4) geringer ist als der axiale Abstand zwischen dem Außengewinde (25) des Verbindungsansatzes (24) und dem Kolbenboden (4), und
**dass** die Wanddicken des Verbindungsansatzes (24) und der Zwischenhülse (27) derart dimensioniert sind, dass beim Verschrauben des Oberteils (2) mit dem Unterteil (3) über den Verbindungsansatz (24) und über die Zwischenhülse (27) der Verbindungsansatz (24) insoweit dehnbar und die Zwischenhülse (27) insoweit stauchbar sind, dass hierdurch eine der Fixierung der Schraubverbindung (12, 24-31) dienende mechanische Spannung erzeugbar ist.

2. Kolben nach Anspruch 1, **dadurch gekennzeichnet, dass** der Verbindungsansatz (24) an seinem dem Kolbenboden (4) abgewandten Ende einen Schraubflansch (30) mit dem Außengewinde (25) aufweist, dass das innen liegende Gewinde (28) auf der gesamten Innenseite der Zwischenhülse (27) angeordnet ist, und dass die Zwischenhülse (27) an ihrem dem Kolbenboden (4) zugewandten Ende einen Schraubflansch (31) mit dem außenliegenden Gewinde (29) aufweist.

## Claims

1. A multi-piece piston (1) for an internal combustion engine
- having an upper part (2) comprising a piston crown (4), onto which a ring wall (6) with a ring belt (8) is moulded, and
- having a lower part (3), which is connected to the upper part (2) by means of a screw connection (12, 24-31) and comprises, on its underside remote from the upper part (2), pin bosses (17, 17') with pin bores (18, 18') and piston skirt elements (21) connected to the pin bosses (17, 17'),
**characterised in that**
the screw connection consists of the following elements:
- a substantially tubular connection extension (24) fitted on the underside of the piston crown (4), which connection extension (24) is arranged coaxially with the longitudinal axis (20) of the piston and comprises an external thread (25) on its end directed axially away from the piston crown (4), which external thread (25) is arranged on a radially outer circumferential surface of the connection extension (24),
- a supporting rib (12) moulded onto the lower part (3) on the piston crown side, which supporting rib (12) comprises an internal thread (26) on its piston crown end when viewed in the axial direction, which internal thread (26) is arranged on a radially inner face, and
- a substantially tubular intermediate sleeve (27) with an inside thread (28), which fits onto the external thread (25) of the connection extension (24), and an outside thread (29), which fits into the internal thread (26) of the supporting rib (12), the upper part (2) being screwable together with the lower part (3) by means of the intermediate sleeve (27) by way of the connection extension (24) and the supporting rib (12),
**in that** the axial distance between the internal thread (26) of the supporting rib (12) and the piston crown (4) is smaller than the axial distance between the external thread (25) of the connection extension (24) and the piston crown (4), and
**in that** the wall thicknesses of the connection extension (24) and the intermediate sleeve (27) are dimensioned in such a way that, when screwing the upper part (2) together with the lower part (3) by way of the connection extension (24) and by way of the intermediate sleeve (27), the connection extension (24) may be expanded and the intermediate sleeve (27) compressed to such an extent that a mechanical stress serving to fix the screw connection (12, 24-31) may be produced thereby.

2. A piston according to claim 1, **characterised in that,** at its end remote from the piston crown (4), the connection extension (24) comprises a screw flange (30) with the external thread (25), **in that** the inside thread (28) is arranged over the entire inner side of the intermediate sleeve (27) and **in that**, at its end facing the piston crown (4), the intermediate sleeve (27) comprises a screw flange (31) with the outside thread (29).

## Revendications

1. Piston (1) en plusieurs parties destiné à un moteur à combustion interne
- avec une partie supérieure (2) présentant une couronne de piston (4) et sur laquelle est formée une paroi annulaire (6) avec une zone de segments (8), et
- avec une partie inférieure (3) reliée à la partie supérieure (2) par un raccord vissé (12, 24-31) et présentant sur son côté opposé à la partie supérieure (2) des moyeux d'axe (17, 17') avec des alésages d'axe (18, 18') et des éléments de jupe de piston (21) reliés aux moyeux d'axe (17, 17'),
**caractérisé en ce**
**que** le raccord vissé est constitué des éléments suivants :
- un épaulement de raccord (24) tubulaire pour l'essentiel disposé coaxialement par rapport à l'axe longitudinal du piston (20) sur la face inférieure de la couronne de piston (4) et présentant à son extrémité opposée à la couronne de piston (4) dans le sens axial un filet extérieur (25) qui se trouve sur une face circonférentielle de l'épaulement de raccord (24) située radialement vers l'extérieur,
- une nervure portante (12) formée dans la partie inférieure (3) du côté de la couronne de piston, qui vue dans le sens axial, présente à son extrémité du côté de la couronne de piston un filet intérieur (26) qui se trouve sur une surface intérieure dans le sens radial, et
- une douille intermédiaire (27) tubulaire pour l'essentiel avec un filet situé à l'intérieur (28) adapté au filet extérieur (25) de l'épaulement de raccord (24), et un filet situé à l'extérieur (29) qui s'adapte dans le filet intérieur (26) de la nervure portante (12), sachant qu'au moyen de la douille intermédiaire (27), la partie supérieure (2) peut être vissée à la partie inférieure (3) par l'épaulement de raccord (24) et la nervure portante (12),
**que** la distance axiale entre le filet intérieur (26) de la nervure portante (12) et la couronne de piston (4) est inférieure à la distance axiale entre le filet extérieur (25) de l'épaulement de raccord (24) et la couronne de piston (4), et
**que** les épaisseurs de paroi de l'épaulement de raccord (24) et de la douille intermédiaire (27) sont dimensionnées de telle manière que, lors du vissage de la partie supérieure (2) avec la partie inférieure (3) au moyen de l'épaulement de raccord (24) et de la douille intermédiaire (27), l'épaulement de raccord (24) est extensible et la douille intermédiaire (27) est compressible à un tel point que cela permet de générer une tension mécanique servant à fixer le raccord vissé (12, 24-31).

2. Piston selon la revendication 1**, caractérisé en ce que**, sur son extrémité opposée à la couronne de piston (4), l'épaulement de raccord (24) présente une bride de vissage (30) avec le filet extérieur (25), que le filet situé à l'intérieur (28) est disposé sur la totalité de la face intérieure de la douille intermédiaire (27), et que, sur son extrémité orientée vers la couronne de piston (4), la douille intermédiaire (27) présente une bride de vissage (31) avec le filet situé à l'extérieur (29).
